# EUROPEAN PATENT APPLICATION

(11) **EP 2 085 430 A1**
(43) Date of publication of application: **05.08.2009**
(21) Application number: 07828565.7
(22) Date of filing: 27.09.2007
(51) Int. Cl.: C09B 45/14, B41M 5/26, G11B 7/244

(54) **AZO METAL CHELATE DYE AND OPTICAL RECORDING MEDIUM**

(30) Priority: 29.09.2006 JP 2006267134
(71) Applicant: Mitsubishi Kagaku Media Co., Ltd., Tokyo 108-8415 (JP)
(72) Inventor: SHODA, Hisashi, Tokyo, 108-8415 (JP); UCHIDA, Naoyuki, Tokyo 108-8415 (JP); SATAKE, Kenichi, Tokyo, 108-8415 (JP); NODA, Yoshihiro, Tokyo 108-8415 (JP)
(74) Representative: Vossius & Partner
(86) International application number: PCT/JP2007/068819
(87) International publication number: WO 2008/038717

(57) **Abstract**

The invention provides an azo metal chelate dye suitable for use in a recording layer of an optical recording medium capable of high-speed recording or an optical recording medium having plural recording layers, and an optical recording medium. The azo metal chelate dye comprises an azo dye compound represented by general formula (1) and a metal: 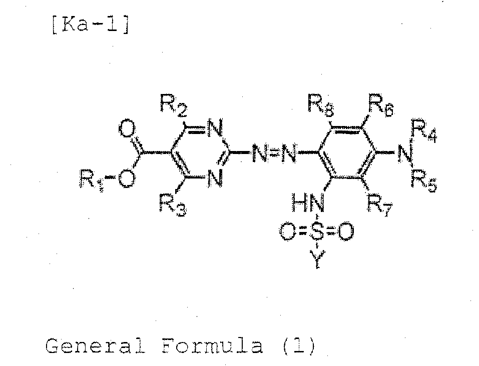 (wherein R₁ represents a linear or branched alkyl group that may be substituted or a cycloalkyl group that may be substituted; R₂ and R₃ each independently represents a hydrogen atom, a linear or branched alkyl group that may be substituted, an aryl group that may be substituted, or a heterocyclic group that may be substituted; R₄, R₅, R₆, R₇, and R₈ each independently represents a hydrogen atom or a linear or branched alky group that may be substituted, and R₄ and R₅, R₄ and R₆, or R₅ and R₇ may be bonded to each other to form a ring; Y represents a linear or branched alkyl group substituted with at least two fluorine atoms; and the chelate dye is constituted of the compound represented by general formula (1) from which a proton is released, and the metal).

## Description

### TECHNICAL FIELD

The present invention relates to an azo metal chelate dye having a high reflectance and an optical recording medium using the dye in a recording layer. More particularly, the invention relates to an azo metal chelate dye suitable for a recording layer of an optical recording medium capable of high-speed recording or for a recording layer of an optical recording medium having two or more recording layers, and also to an optical recording medium (hereinafter, sometimes referred to as "disk" or "optical disk").

### BACKGROUND ART

With the recent trend toward higher processing speeds in computers and higher capacities in hard disks, the amount of data which can be handled has increased. In order to cope with the data amount increase, DVD-Hs are being developed as higher-capacity recording media. Various dyes including cyanine dyes and metal chelate dyes have been proposed as dyes for use in the recording layers of the DVD-Rs. Many optical recording media employing metal chelate dyes, which are excellent in recording characteristics such as light resistance and durability, among those dyes have been proposed (see patent document 1 to patent document 3).

Compounds having a diazo component including a pyrimidine ring, such as those described in patent document 4 to patent document 6, have also been proposed as dyes for use in optical recording media. However, the compounds described in patent document 4 and patent document 5 were found to be difficult to use for recording with a laser having a wavelength of 650 nm, which is in general use for DVD-Rs, although usable for recording with a laser having a wavelength of 635 nm, which is called authoring. In patent document 6 also, there is a report that an optical recording medium employing a compound having a diazo component including a pyrimidine ring was used to conduct recording therein at a rate corresponding to a 1-fold speed. However, this optical recording medium had poor recording sensitivity.

Patent Document 1: JP-A-03-268994
Patent Document 2: JP-A-11-166125
Patent Document 3: JP-A-2000-309722
Patent Document 4: JP-A-10-157300
Patent Document 5: JP-A-10-181203
Patent Document 6: JP-A-2002-092941

### DISCLOSURE OF THE INVENTION

### PROBLEMS TO BE SOLVED BY THE INVENTION

Recently, with a further increase in data amount, it has become important to heighten the rate of information recording in an optical recording medium. Although the ordinary recording rate in DVD-Rs, for example, is about 3.5 m/s (hereinafter, sometimes referred to as 1X), there is a desire for an optical recording medium capable of information recording at a rate not lower than about 28 m/s, which corresponds to eight times that rate (hereinafter, sometimes referred to as 8X). However, when recording is conducted at such a high rate, the quantity of irradiation light used for recording (laser power in the case of a laser) is relatively smaller. Consequently, there is a desire for a dye which enables recording to be conducted even with a low laser power.

On the other hand, with respect to techniques for increasing the capacity of optical recording media, a multilayered recording medium having two or more recording layers has been proposed. In the case of an optical recording medium having two or more recording layers on one side, a light for recording/reproducing is caused to enter the medium from one side. However, the power of the laser light entering a recording layer located far from the entrance side is low. Consequently, in the field of multilayered recording media also, there is a desire for a dye which has high sensitivity enabling recording with a low laser power and which shows low absorption and high reflectance so as to enable a recording light to efficiently reach a recording layer located far from the entrance side.
However, no dye which sufficiently meets those requirements has been found so far.

In view of the problems described above, an object of the invention is to provide an azo metal chelate dye applicable to a recording layer of an optical recording medium capable of recording at a rate as high as an 8-fold speed or higher, or to a recording layer of a multilayered recording medium having two or more recording layers.
Another object of the invention is to provide an optical recording medium employing the azo metal chelate dye.

### MEANS FOR SOLVING THE PROBLEMS

The present inventors aimed to obtain an azo metal chelate dye having the property of being high in sensitivity and reflectance. Specifically, they have found that the problems described above can be eliminated by incorporating a specific structure into a chelate dye constituted of a metal and an azo compound having a diazo component including a pyrimidine ring. The invention has been thus completed.

The invention provides
an azo metal chelate dye comprising an azo dye compound represented by the following general formula (1) and a metal.

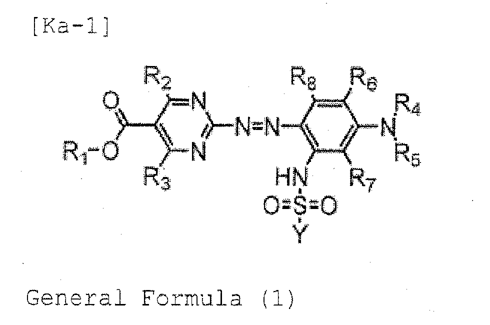

(wherein R₁ represents a linear or branched alkyl group that may be substituted or a cycloalkyl group that may be substituted; R₂ and R₃ each independently represents a hydrogen atom, a linear or branched alkyl group that may be substituted, an aryl group that may be substituted, or a heterocyclic group that may be substituted; R₄, R₅, R₆, R₇, and R₈ each independently represents a hydrogen atom or a linear or branched alkyl group that may be substituted, and R₄ and R₅, R₄ and R₅, or R₅ and R₇ may be bonded to each other to form a ring; Y represents a linear or branched alkyl group substituted with at least two fluorine atoms; and the chelate dye is constituted of the compound represented by general formula (1) from which a proton is released, and the metal).

It is preferred that the metal should be any of Ni, Co, Cu, and Pd .

The invention further provides an azo metal chelate dye comprising an azo dye compound represented by the following general formula (2) and Ni.

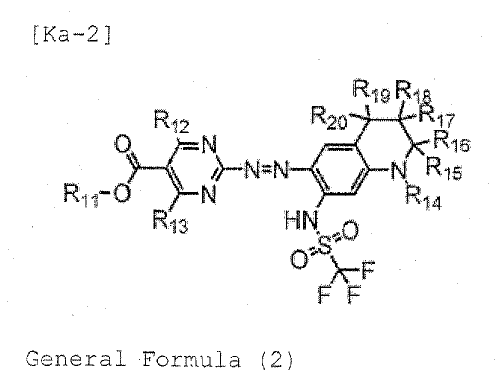

(wherein R₁₁ represents a linear or branched alkyl group that may be substituted or a cycloalkyl group that may be substituted; R₁₂ and R₁₃ each independently represents a hydrogen atom, a linear or branched alkyl group that may be substituted, an aryl group that may be substituted, or a heterocyclic group that may be substituted; R₁₄ represents a linear or branched alkyl group that may be substituted; R₁₅ to R₂₀ each independently represent a hydrogen atom or a linear or branched alkyl group that may be substituted; and the chelate dye is constituted of the compound represented by general formula (2) from which a proton is released, and the metal).
The azo dye compound represented by general formula (2) preferably is one in which R₁₁ is a linear or branched alkyl group having 1-4 carbon atoms, R₁₂ is an unsubstituted or halogen-substituted alkyl or aryl group, R₁₃ is a hydrogen atom, R₁₄ is a linear alkyl group having 1-6 carbon atoms or a branched alkyl group having 3-8 carbon atoms, and R₁₅ to R₂₀ are a hydrogen atom.

The invention furthermore provides an optical recording medium comprising a recording layer including an azo metal chelate dye consisting of the azo dye compound represented by general formula (1) or general formula (2) described above and of a metal.
It is preferred that the optical recording medium to which the invention is applied, has two or more recording layers and at least one of the recording layers includes an azo metal chelate dye consisting of the azo dye compound represented by general formula (1) or general formula (2) and of a metal.
Furthermore, the optical recording medium preferably is capable of recording at an 8-fold speed or higher.

### EFFECT OF THE INVENTION

According to the invention, an azo metal chelate dye and an optical recording medium are provided which are suitable for a recording layer of an optical recording medium capable of high-speed recording or for a recording layer of an optical recording medium having two or more recording layers.

### BEST MODE FOR CARRYING OUT THE INVENTION

Best modes for carrying out the invention (hereinafter, referred to as embodiments of the invention) will be explained below in detail. The invention should not be construed as being limited to the following embodiments, and various modifications of the invention can be made within the spirit of the invention.

The azo metal chelate dye to which this embodiment is applied is explained below.
The azo metal chelate dye to which this embodiment is applied is formed by combining the azo dye compound represented by the following general formula (1) with a metal by chelate bonding.
The azo dye compound represented by general formula (1) is formed by combining a diazo component including a pyrimidine ring with a coupler component at least containing a fluorine-substituted alkylsulfonylamino group and an amino group. An optical recording medium having a recording layer containing an azo metal chelate dye having such structure has excellent weatherability and has an improved reflectance due to the high extinction coefficient of the dye. Furthermore, since the pyrimidine ring of the diazo component has been substituted with an ester group, the dye has excellent light resistance. This is thought to be because the pyrimidine ring has a reduced electron density because the pyrimidine ring has been substituted with the electron-attracting group and, hence, back donation of electrons from the chelated metal is enhanced to stabilize the dye.

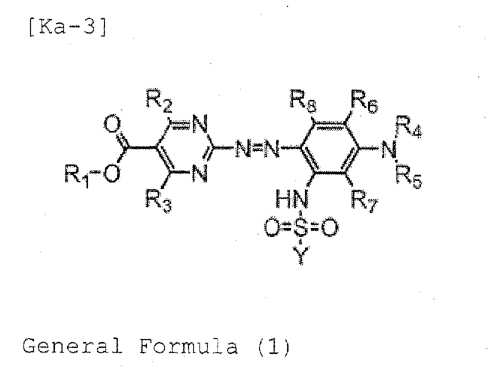

(In general formula (1), R₁ represents a linear or branched alkyl group that may be substituted or a cycloalkyl group that may be substituted; R₂ and R₃ each independently represents a hydrogen atom, a linear or branched alkyl group that may be substituted, an aryl group that may be substituted, or a heterocyclic group that may be substituted; R₄, R₅, R₆, R₇, and R₈ each independently represents a hydrogen atom or a linear or branched alkyl group that may be substituted, and R₄ and R₅, R₄ and R₆, or R₅ and R₇ may be bonded to each other to form a ring; Y represents a linear or branched alkyl group substituted with at least two fluorine atoms; and the chelate dye is constituted of the compound represented by general formula (1) from which a proton is released, and the metal).

In general formula (1), R₁ is an optionally substituted linear or branched alkyl group or an optionally substituted cycloalkyl group. It is preferred that R₁ should be, for example, an unsubstituted linear or branched alkyl group, anunsubstituted cycloalkyl group, a fluorine-substituted linear or branched alkyl group, or an alkoxy-substituted linear or branched alkyl group.

Preferred examples of R₁ include linear or branched alkyl groups having 1-4 carbon atoms, such as ethyl, propyl, isopropyl, butyl, isobutyl, t-butyl, and sec-butyl, and cycloalkyl groups having 3-8 carbon atoms, such as cyclopropyl, cyclobutyl, cyclopentyl, cyclohexyl, and cycloheptyl.
Especially preferred examples thereof include linear alkyl groups having 1-2 carbon atoms, such as methyl and ethyl, and cycloalkyl groups having 3-6 carbon atoms, such as cyclopentyl and cyclohexyl, because such groups cause reduced steric hindrance.
Examples of substituents of the alkyl group or cycloalkyl group represented by R₁ include halogen atoms and substituents containing a typical element such as oxygen, nitrogen, or sulfur. However, R₁ preferably is an unsubstituted group.

R₂ and R₃ each independently represent a hydrogen atom, an optionally substituted linear or branched alkyl group, an optionally substituted aryl group, or an optionally substituted heterocyclic group. Examples of the optionally substituted linear or branched alkyl group include the same groups as those enumerated above with regard to R₁.
Examples of the aromatic ring as the aryl group include benzene and naphthalene. Examples of the heterocycle as the heterocyclic group include unsaturated heterocycles such as pyridine, pyrimidine, thiophene, and furan; and saturated heterocyclic groups such as Meldrum's acid, barbituric acid, pyridone, piperidine, morpholine, and tetrahydrofuran.

Examples of substituents with which the aryl group or heterocyclic group may be substituted include alkyl groups, alkoxy groups, amino, and halogen atoms.
Preferred examples of R₂ and R₃, among those, are a hydrogen atom; alkyl groups such as methyl, ethyl, n-propyl, isopropyl, and isobutyl; halogen-substituted alkyl groups such as trifluoromethyl and pentafluoroethyl; aromatic rings such as phenyl and naphthyl; halogen-substituted aromatic rings such as pentafluorophenyl; and unsaturated heterocycles such as pyridine and pyrimidine.

Preferred specific examples of that compound in the diazo component in general formula (1) which is constituted of the pyrimidine ring substituted with CO₂R₁ include the compounds having the following structures.

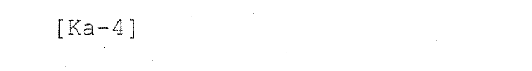

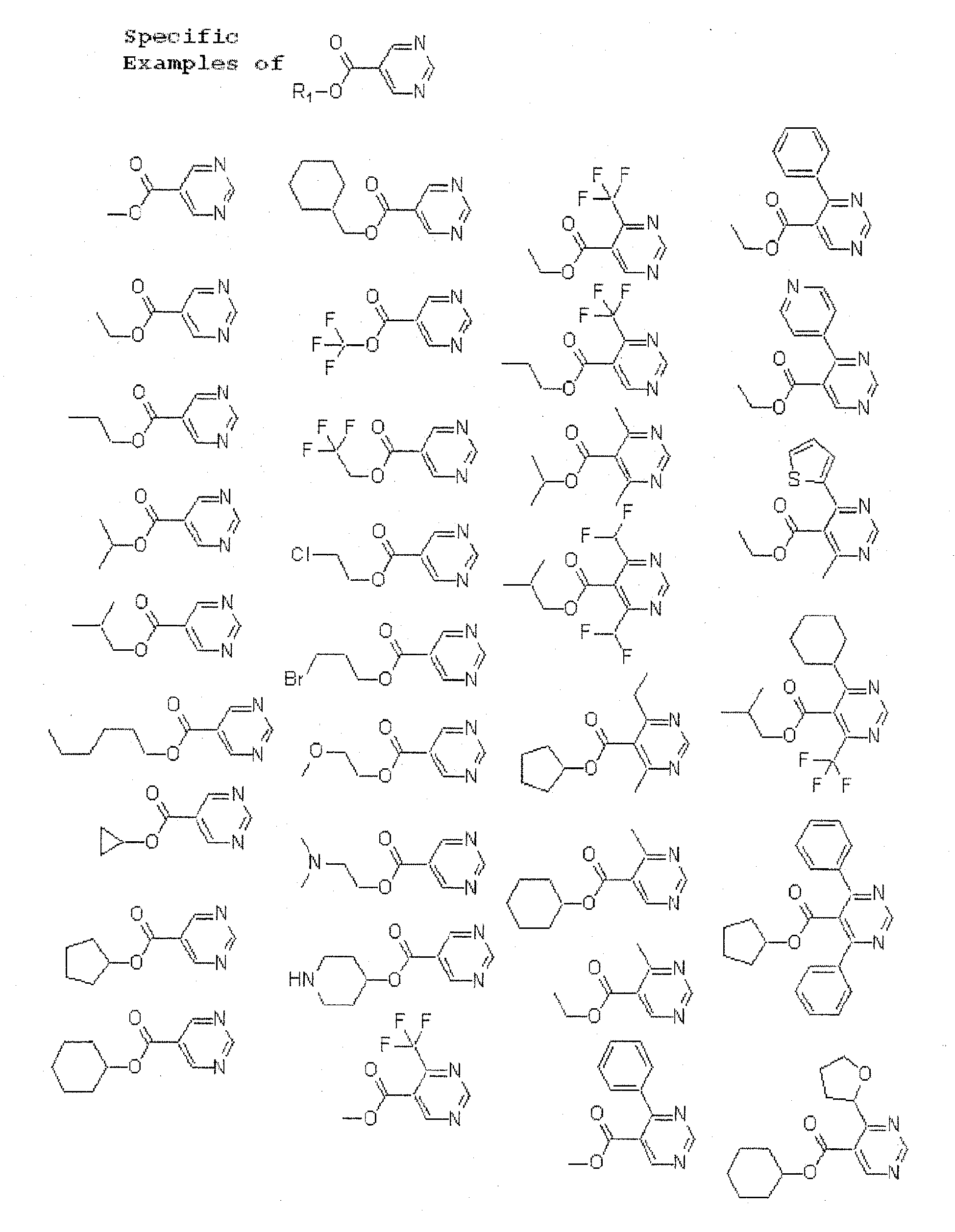

The coupler component in general formula (1) includes a benzene ring substituted with NHSO₂Y, wherein Y is a linear or branched alkyl group substituted with at least two fluorine atoms. This alkyl group more preferably is a linear or branched alkyl group having 1-6 carbon atoms. It is more preferred that the alkyl group of Y should be a linear alkyl group having 1-3 carbon atoms. The number of the substituent fluorine atoms is generally 2 or larger and is generally 7 or smaller, preferably 5 or smaller, more preferably 3 or smaller. Specific examples of Y include difluoromethyl, trifluoromethyl, pentafluoroethyl, pentafluoropropyl, 2,2,2-trifluoroethyl, and 3,3,3-trifluoropropyl. Especially preferred examples of Y include trifluoromethyl and 2,2,2-trifluoroethyl.

R₄, R₅, R₆, R₇, and R₈ each independently are a hydrogen atom or an optionally substituted linear or branched alkyl group. Examples of R₄, R₅, R₆, R₇, and R₈ include a hydrogen atom; linear alkyl groups having 1-6 carbon atoms, such as methyl, ethyl, n-prapyl, n-butyl, n-pentyl, and n-hexyl; and branched alkyl groups having 3-8 carbon atoms, such as isopropyl, sec-butyl, isobutyl, t-butyl, 2-ethylhexyl, cyclopropyl, and cyclohexylmethyl.

Those linear or branched alkyl groups may further have substituents. Examples of the substituents of the linear or branched alkyl groups include halogen atoms, alkoxy groups, alkoxycarbonyl groups, alkylcarbonyloxy groups, alkylcarbonyl groups, and dialkylamino groups. Specific examples thereof include halogen atoms such as fluorine, chlorine, bromine, and iodine; alkoxy groups having 1-8 carbon atoms, such as methoxy, ethoxy, n-propoxy, isopropoxy, n-butoxy, isobutoxy, sec-butoxy, t-butoxy, n-pentyloxy, cyclopropyloxy, cyclohexylmethyloxy, and 2-ethylhexyloxy; alkoxycarbonyl groups having 2-9 carbon atoms, such as methoxycarbonyl, ethoxycarbonyl, n-propoxycarbonyl, isopropoxycarbonyl, n-butoxycarbonyl, isobutoxycarbonyl, sec-butoxycarbonyl, t-butoxycarbonyl, n-pentyloxycarbonyl, cyclopropyloxycarbonyl, cyclohexylmethoxycarbonyl, and 2-ethylhexyloxycarbonyl; alkylcarbonyloxy groups having 2-9 carbon atoms, such as methylcarbonyloxy, ethylcarbonyloxy, n-propylcarbonyloxy, isopropylcarbonyloxy, n-butylcarbonyloxy, isobutylcarbonyloxy, sec-butylcarbonyloxy, t-butylcarbonyloxy, n-pentylcarbonyloxy, cyclopropylcarbonyloxy, cyclohexylmethylcarbonyloxy, and 2-ethylhexylcarbonyloxy; alkylcarbonyl groups having 2-9 carbon atoms, such as acetyl, propionyl, butyryl, isobutyryl, valeryl, isovaleryl, 2-methylbutyryl, pivaloyl, hexanoyl, cyclopropylcarbonyl, cyclohexylmethylcarbonyl, and 2-ethylhexylcarbonyl; and dialkylamino groups having 2-16 carbon atoms, such as dimethylamino, diethylamino, dipropylamino, diisopropylamino, dibutylamino, diisobutylamino, di-t-butylamino, dihexylamino, ethylmethylamino, and butylpentylamino.
R₄, R₅, R₆, R₇, and R₈ each preferably are a hydrogen atom or a linear alkyl group having 1-6 carbon atoms, and more preferably are a hydrogen atom or an alkyl group having 1-2 carbon atoms. The alkyl group preferably is an unsubstituted one.

R₄ and R₅, R₄ and R₆, or R₅ and R₇ may be bonded to each other to form a ring. The ring thus formed is not particularly limited. Examples thereof include saturated or unsaturated, 3- to 8-membered carbocycles or heterocycles. Preferred examples thereof include a 5- to 7-membered ring which is formed by the bonding of R₄ to R₆ or R₄ to R₈ and is a saturated ring wherein all the constituent atoms other than the nitrogen atom shown in general formula (1) are carbon. The ring formed may have substituents. In a most preferred case, R₄ and R₆ are bonded to each other to form a 5- to 7-membered ring which is a saturated ring wherein all the constituent atoms other than the nitrogen atom shown in general formula (1) are carbon and which has no substituent or has been substituted with 1-3 methyl groups.

Preferred examples of the azo dye compound represented by general formula (1) include a compound represented by the following general formula (2).

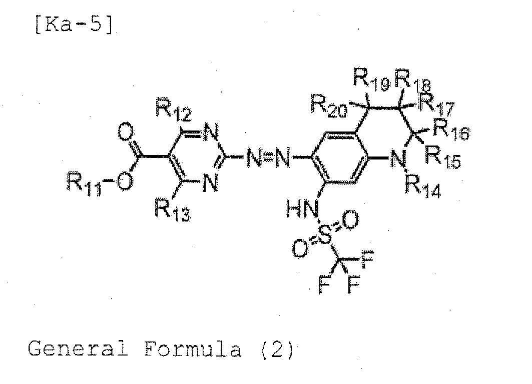

(In general formula (2), R₁₁ represents a linear or branched alkyl group that may be substituted or a cycloalkyl group that may be substituted; R₁₂ and R₁₃ each independently represents a hydrogen atom, a linear or branched alkyl group that may be substituted, an aryl group that may be substituted, or a heterocyclic group that may be substituted; R₁₄ represents a linear or branched alkyl group that may be substituted; R₁₅ to R₂₀ each independently represent a hydrogen atom or a linear or branched alkyl group that may be substituted; and the chelate dye is constituted of the compound represented by general formula (2) from which a proton is released, and the metal).

In general formula (2), R₁₁ is an optionally substituted linear or branched alkyl group or an optionally substituted cycloalkyl group. Examples of R₁₁ are the same as those of R₁ in general formula (1).

R₁₂ and R₁₃ each independently are a hydrogen atom, an optionally substituted linear or branched alkyl group, an optionally substituted aryl group, or an optionally substituted heterocyclic group. Examples thereof are the same as those of R₂ and R₃ in general formula (1). It is especially preferred that R₁₂ should be an unsubstituted or halogen-substituted alkyl or aryl group and R₁₃ should be a hydrogen atom.

R₁₄ is an optionally substituted linear or branched alkyl group. Examples of R₁₄ include linear alkyl groups having 1-6 carbon atoms, such as methyl, ethyl, propyl, butyl, pentyl, and hexyl; and branched alkyl groups having 3-8 carbon atoms, such as isopropyl, sec-butyl, isobutyl, t-butyl, 2-ethylhexyl, cyclopropyl, and cyclohexylmethyl. These alkyl groups may have been substituted. Examples of the substituents include halogen atoms, alkoxy groups, alkoxycarbonyl groups, alkylcarbonyloxy groups, alkylcarbonyl groups, and dialkylaminogroups. Specific examples thereof include halogen atoms such as fluorine, chlorine, bromine, and iodine; alkoxy groups having 1-8 carbon atoms, such as methoxy, ethoxy, n-propoxy, isopropoxy, n-butoxy, isobutoxy, sec-butoxy, t-butoxy, n-pentyloxy, cyclopropyloxy, cyclohexylmethyloxy, and 2-ethylhexyloxy; alkoxycarbonyl groups having 2-9 carbon atoms, such as methoxycarbonyl, ethoxycarbonyl, n-propoxycarbonyl, isopropoxycarbonyl, n-butoxycarbonyl, isobutoxycarbonyl, sec-butoxycarbonyl, t-butoxycarbonyl, n-pentyloxycarbonyl, cyclopropyloxycarbonyl, cyclohexylmethoxycarbonyl, and 2-ethylhexyloxycarbonyl; alkylcarbonyloxy groups having 2-9 carbon atoms, such as methylcarbonyloxy, ethylcarbonyloxy, n-propylcarbonyloxy, isopropylcarbonyloxy, n-butylcarbonyloxy, isobutylcarbonyloxy, sec-butylcarbonyloxy, t-butylcarbonyloxy, n-pentylcarbonyloxy, cyclopropylcarbonyloxy, cyclohexylmethylcarbonyloxy, and 2-ethylhexylcarbonyloxy; alkylcarbonyl groups having 2-9 carbon atoms, such as acetyl, propionyl, butyryl, isobutyryl, valeryl, isovaleryl, 2-methylbutyryl, pivaloyl, hexanoyl, cyclopropylcarbonyl, cyclohexylmethylcarbonyl, and 2-ethylhexylcarbonyl; and dialkylamino groups having 2-16 carbon atoms, such as dimethylamino, diethylamino, dipropylamino, diisopropylamino, dibutylamino, diisobutylamino, di-t-butylamino, dihexylamino, ethylmethylamino, and butylpentylamino.

Preferred examples of R₁₄ among those are unsubstituted linear alkyl groups having 1-6 carbon atoms or unsubstituted branched alkyl groups having 3-8 carbon atoms. In the case where an unsubstituted linear alkyl group is used, the number of carbon atoms therein is preferably 5 or smaller, more preferably 4 or smaller. The total number of carbon atoms in R₁₄ is preferably 7 or smaller, more preferably 6 or smaller, even more preferably 5 or smaller, especially preferably 4 or smaller. Especially preferably, R₁₄ is methyl, ethyl, propyl, isopropyl, or isobutyl.

R₁₅, R_{16,} R_{17,} R_{18,} R₁₉, and R₂₀ each independently represent a hydrogen atom or an optionally substituted linear or branched alkyl group. The linear or branched alkyl group preferably is an alkyl group having 1-6 carbon atoms, and especially preferably is an alkyl group having 1 or 2 carbon atoms. In the case where R₁₅, R₁₆, R₁₇, R₁₈, R₁₉, and R₂₀ each are an alkyl group having 1-2 carbon atoms, one or more of the hydrogen atoms bonded to the carbon atom(s) may have been replaced by another substituent (e.g., a halogen atom). However, the alkyl group preferably is an unsubstituted alkyl group, examples of which include methyl and ethyl. From the standpoints of ease of synthesis and conformation, it is most preferred that R_{15,} R₁₆, R₁₇, R₁₈, R₁₉, and R₂₀ each should be a hydrogen atom.

The azo dye compound represented by general formula (1) generally has a molecular weight of 2,000 or lower. In particular, when the azo dye compound has a molecular weight of 1,500 or lower, this compound is preferred because it has enhanced solubility in solvents and gives a dye excellent in light resistance, weatherability, and high-reflectance characteristics. Specific examples of the compound represented by general formula (1) include the following compounds.

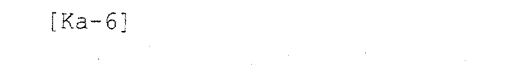

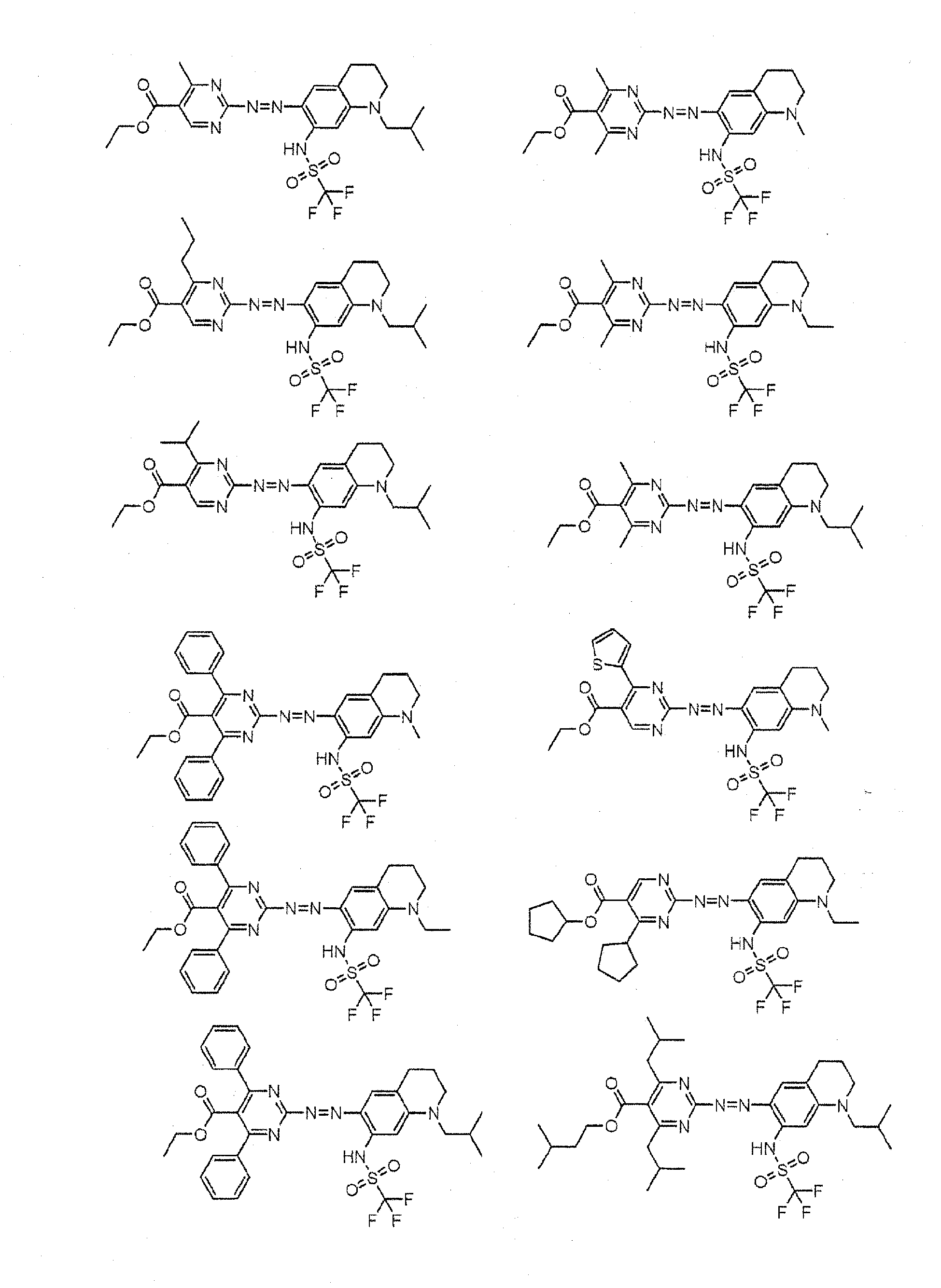

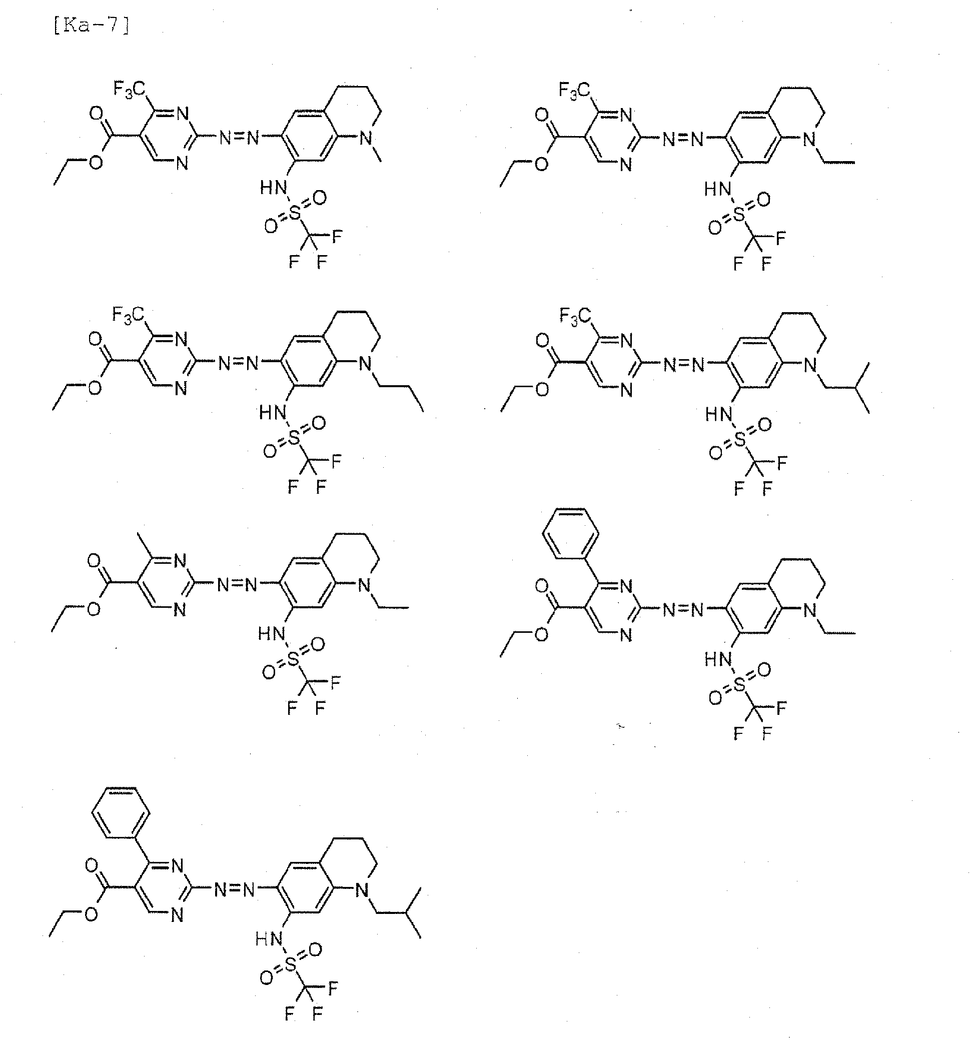

The azo metal chelate dye is not particularly limited except its chemical structure. However, from the standpoint of use in optical recording media capable of recording/reproducing with a short-wavelength laser light, which application will become necessary more and more in future, the dye more preferably is one which, when examined as a film of the dye alone, has an absorption maximum at a wavelength of 700 nm or shorter. Even more preferred is a dye having an absorption maximum at a wavelength of 650-500 nm.

In the azo metal chelate dye of the invention, the metal which forms the chelate with the azo dye compound represented by general formula (1) is not limited. However, the metal preferably is any of Ni, Co, Cu, and Pd, and especially preferably is Ni. When the metal used is any of these metals, the azo metal chelate dye is improved in light resistance, weatherability, etc. Those metals can form a hexacoordinate complex of an octahedral structure with two tridentate ligands. Consequently, the azo metal chelate dye of the invention is thought to be an exceedingly stable recording material.

The valence of the chelated metal is not particularly limited. In the case where the (+) charge possessed by the metal does not balance with the (-) charge possessed by the azo dye compound swerving as ligands, it is sufficient to prepare an appropriate counter anion or cation. However, from the standpoint of forming a hexacoordinate complex of an octahedral structure with two ligands according to the invention, it is preferred that the valence of the metal should be +2.
It is especially preferred that the azo metal chelate dye of the invention should be a chelate compound constituted of an azo dye compound represented by general formula (2) and nickel.
Examples of methods for forming the azo metal chelate dye of the invention include a method in which ligands are mixed with a metal salt in a solvent. During this chelate formation, the azo dye compound represented by general formula (1) or general formula(2) undergoes proton release therefrom for chelate formation with the metal. Although the protons to be released may be any protons in the structure of the azo dye compound, they preferably include one in the amide part. According to need, a base such as, e.g., an amine or an alkoxide may be used in order to accelerate the proton release.

The optical recording medium is described below.
The optical recording medium to which this embodiment is applied has a recording layer including an azo metal chelate dye constituted of an azo dye compound represented by general formula (1) and or a metal. This optical recording medium is not limited in constitution. However, it generally has a substrate and may have a layer constitution optionally including an undercoat layer, reflective layer, protective layer, etc. Examples of optical recording media having a preferred layer constitution include one which has a recording layer, reflective layer, and protective layer formed over a substrate.

The optical recording medium to which this embodiment is applied is explained below with respect to an optical recording medium of a structure having such layer constitution as an example.
The material of the substrate in the optical recording medium to which this embodiment is applied may basically be any material which is transparent at the wavelengths of a recording light and reproducing light. For example, a polymeric material such as a polycarbonate resin, vinyl chloride resin, acrylic resin, e.g., poly(methyl methacrylate), polystyrene resin, epoxy resin, vinyl acetate resin, polyester resin, polyethylene resin, polypropylene resin, polyimide resin, or amorphous polyolefin or an inorganic material such as glass is used. It is preferred to use a polycarbonate resin from the standpoints of high productivity, cost, low moisture absorption, etc.

These substrate materials are molded into a disk-form substrate by, e.g., injection molding. There are cases where a guide groove or pits are formed in a surface of the substrate according to need. Although it is preferred that such guide groove or pits should be imparted in substrate molding, a guide groove or pits may be imparted by means of an ultraviolet-cured resin layer formed on the substrate. In the case where the guide groove is spiral, the pitch of this groove is preferably about from 0.4 µm to 1.2 µm, especially preferably about from 0.6 µm to 0.9 µm.

The depth of the groove is generally from 100 nm to 200 nm in terms of value measured with an AFM (atomic force microscope). For enabling the recording medium to be capable of recording at rates ranging from a low rate of 1X to a high rate of 8X or above, it is preferred to regulate the groove depth to about from 150 nm to 180 nm. When the groove depth is larger than the lower limit, a high degree of modulation is apt to be obtained at low rates. When the groove depth is smaller than the upper limit, a sufficient reflectance is apt to be secured. The width of the groove is generally from 0.20 µm to 0.40 µm in terms of value measured with an AFT (atomic force microscope). For high-speed recording, it is more preferred to regulate the groove width to about from 0.28 µm to 0.35 µm. When the groove width is larger than the lower limit, a sufficient amplitude of push-pull signals is apt to be obtained. On the other hand, deformation of the substrate considerably influences the amplitude of recorded signals. Because of this, when the groove width is regulated so as to be larger than lower limit, it is easy to diminish the influence of thermal interference in recording at a high rate of 8X or above and thereby obtain satisfactory bottom jitter. Furthermore, satisfactory recording characteristics and recording conditions are obtained, such as a widened recording power margin and an increased allowance of laser power fluctuations. When the groove width is smaller than the upper limit, thermal interference within recording marks in recording at a low rate of, e.g., 1X can be diminished and a satisfactory bottom jitter value is apt to be obtained.

In the optical recording medium to which this embodiment is applied, information such as address information, information on the kind of the medium, recording pulse conditions, optimal recording power, etc. can be recorded. As a mode for recording such information, use may be made of, for example, an LPP or ADIP format described in, e.g., a DVD-R or DVD+R standard.

In producing the optical recording medium to which this embodiment is applied, a recording layer containing the azo metal chelate dye described above is formed on the substrate or on an undercoat layer or another layer formed according to need. Such a recording layer containing an azo metal chelate dye is required to have high sensitivity and a high reflectance. The recording layer containing the azo metal chelate dye of the invention can satisfy these requirements. In particular, not only an optical recording medium capable of recording at a rate as high as 8X or above but also the multilayered medium having two or more recording layers which will be described later can be realized.

Hitherto, a technique which has been used for forming a recording layer capable of high-rate recording (or for obtaining a dye having higher sensitivity) is to shift absorption wavelengths to the longer-wavelength side and thereby increase the amount of light absorbed at a recording wavelength. However, this technique has had a problem that the recording layer has a reduced reflectance although increased in absorption amount. The formation of the target recording layer especially in a multilayered medium has been more difficult because a higher reflectance is required in this medium than in single-layer media.
In contrast, use of a recording layer containing the azo metal chelate dye of the invention can reconcile higher sensitivity with a higher reflectance. Compared to conventional azo metal chelate dyes, the azo metal chelate dye of the invention has an exceedingly high extinction coefficient and hence attains an improvement in refractive index. It is therefore thought that a reflectance improvement is attainable by a degree higher than the decrease in reflectance resulting from the shifting of absorption wavelengths to the longer-wavelength side.
The azo metal chelate dye of the invention can be used also in optical recording media capable of recording at 12X or higher, in particular, 16X or higher. In this case, it is preferred to use the dye in combination with other dye(s).

Examples of techniques usable for forming the recording layer in the optical recording medium to which this embodiment is applied include thin-film formation techniques in general use, such as vacuum deposition, sputtering, doctor blade method, casting, spin coating, and dipping. From the standpoints of suitability for mass-production and cost, spin coating is especially preferred.

In the case of film formation by spin coating, the rotation speed is preferably from 500 rpm to 10, 000 rpm. After spin coating, a treatment such as, e.g., heating or exposure to a solvent vapor may be conducted according to need. In the case where the recording layer is formed by coating fluid application by the doctor blade method, casting, spin coating, dipping, or the like, any coating solvent which does not attack the substrate may be used without particular limitations. Examples of the coating solvent include ketone alcohol solvents such as diacetone alcohol and 3-hydroxy-3-methyl-2-butanone; Cellosolve solvents such as methyl Cellosolve and ethyl Cellosolve; chain hydrocarbon solvents such as n-hexane and n-octane; cyclic hydrocarbon solvents such as cyclohexane, methylcyclohexane, ethylcyclohexane, dimethylcyclohexane, n-butylcyclohexane, t-buzylcyclohexane, and cyclooctane; perfluoroalkyl alcohol solvents such as tetrafluoropropanol, octafluoropentanol, and hexafluorobutanol; and hydroxycarboxylic acid ester solvents such as methyl lactate, ethyl lactate, and methyl isobutyrate.
In the invention, the content of the azo metal chelate dye of the invention in the recording layer is not particularly limited so long as the effects of the invention are obtained. However, the content thereof is generally 0.1-100% by weight, preferably 10-100% by weight, more preferably 40-100% by weight.

In forming the recording layer, additives such as, e.g., a quencher, ultraviolet absorber, and adhesive may be mixed with the dye according to need. Alternatively, it is possible to introduce a substituent having any of various effects, such as a quenching effect and an ultraviolet-absorbing effect, into the dye. Preferred examples of singlet oxygen quenchers which may be added for improving the light resistance and durability of the recording layer include metal complexes such as acetylacetonato complexes, bisdithiol complexes, e.g., bisdithio-α-diketone and bisphenyldithiol complexes, thiocatechol complexes, salicylaldehyde oxime complexes, and thiobisphenolate complexes. Amine compounds are also preferred.

The dye may be used in combination with one or more other dyes in order to improve recording characteristics, etc. Furthermore, the azo metal chelate dye to which this embodiment is applied may be used in combination with a dye for low-speed recording in order to reconcile high-speed recording with low-speed recording. In this case, the proportion of the dye for low-speed recording may be lower than 60% and is preferably 50% or lower, more preferably 40% or lower, based on the weight of the azo metal chelate dye. On the other hand, when the dye for low-speed recording is also used, the proportion thereof is generally 0.01% or higher. In case where the proportion of the dye for low-speed recording is excessively high, there is a possibility that recording sensitivity necessary for high-speed recording at 8X or above might not be sufficiently obtained. The azo metal chelate dye of the invention may be used in combination with other dyes for high-speed recording.

Examples of the dyes usable with the dye of the invention include azo dye compounds of the same family as the azo dye compound represented by general formula (1). Other examples of the dyes usable with the dye of the invention include azo dyes or azo metal chelate dyes of the same family as the azo metal chelate dye having the specific properties or structure, cyanine dyes, squarylium dyes, naphthoquinone dyes, anthraquione dyes, porphyrin dyes, tetrapyraporphyrazine dyes, indophenol dyes, pyrylium dyes, thiopyrylium dyes, azulenium dyes, triphenylmethane dyes, xanthene dyes, indanthrene dyes, indigo dyes, thioindigo dyes, merocyanine dyes, bispyrromethene dyes, thiazine dyes, acridinedyes, oxazine dyes, and indoaniline dyes. Namely, dyes of other families may be used. Examples of dye pyrolysis accelerators include metal compounds such as metallic antiknock agents, metallocene compounds, and acetylacetonatometal complexes.

A binder, leveling agent, antifoaming agent, and the like may also be used according to need. Preferred binders include poly(vinyl alcohol), polyvinylpyrrolidone, nitrocellulose, cellulose acetate, ketone resins, acrylic resins, polystyrene resins, urethane resins, poly(vinyl butyral), polycarbonates, and polyolefins.

The thickness of the recording layer (dye layer) is not particularly limited. However, the thickness thereof is preferably from 10 nm to 300 nm. When the thickness of the dye layer is larger than the lower limit, the influence of thermal diffusion can be diminished to facilitate satisfactory recording. Furthermore, recorded signals are less apt to deform and, hence, an increased signal amplitude is apt to be obtained. When the thickness of the dye layer is smaller than the upper limit, a higher reflectance is apt to be obtained and satisfactory reproduced-signal characteristics are apt to be attained.

The groove-part thickness of the recording layer is generally from 30 nm to 180 nm, preferably from 50 nm to 90 nm. The land-part thickness thereof is generally from 10 nm to 100 nm, preferably from 30 nm to 70 nm. When the groove-part thickness or land-part thickness is larger than the lower limit, the amplitude of address information (LPP or ADIP) can be increased and error occurrence is apt to be inhibited. When the groove-part thickness or land-part thickness is smaller than the upper limit, the influence of heat buildup within recording marks and crosstalk can be inhibited from increasing and satisfactory bottom jitter is apt to be obtained.

In the optical recording medium to which this embodiment is applied, a reflectance of 40% or higher can be attained by employing a recording layer containing the azo metal chelate dye having the specific properties or structure described above in combination with the shape of a groove formed in the substrate. Because of this, a DVD-R (although there are two kinds, i.e., DVD-R and DVD+R, according to standards, these two are inclusively referred to as DVD-R) which has reproducing compatibility with, e.g., DVD-ROMs can be realized. The term reflectance means the reflectance measured with a disk reproducer having a pickup including a laser with a wavelength in the range of from 650 nm + 10 nm to 650 nm - 5 nm (e.g., a DVD player, DVD inspector, or DVD drive) when the groove of the optical disk is tracked.

A reflective layer preferably having a thickness of from 50 nm to 300 nm is then formed on the recording layer. As a material for forming the reflective layer, one having a sufficiently high reflectance at the wavelength of a reproducing light can be used. For example, metals such as Au, Al, Ag, Cu, Ti, Cr, Ni, Pt, Ta, and Pd can be used alone or as an alloy thereof. Of these, Au, Al, and Ag have a high reflectance and are suitable as a material for the reflective layer. In particular, silver and silver alloys are preferred because they are superior in reflectance and thermal conductivity. Besides those metals, the following may be contained. Examples of elements which may be contained include metals and semimetals such as Mg, Se, Hf, V, Nb, Ru, W, Mn, Re, Fe, Co, Rh, Ir, Cu, Zn, Cd, Ga, In, Si, Ge, Te, Pb, Po, Sn, and Bi. Of these, a material including silver as a main component is especially preferred from the standpoints, for example, that it has a low cost, that it tends to improve reflectance when used in combination with the azo metal chelate dye, and that when the print-receiving layer which will be described later is to be formed, a white beautiful ground color can be imparted thereto. The term main component herein means a component whose content is 50% or higher. The azo metal chelate dye of the invention shows reduced physical or chemical interaction with silver. Because of this, even when a reflective layer including silver is employed, the optical recording medium has a prolonged life (long-term stability). A multilayered film formed by alternately superposing a low-refractive-index thin film and a high-refractive-index thin film using nonmetallic materials can also be used as a reflective layer.

Examples of techniques for forming the reflective layer include sputtering, ion plating, chemical vapor deposition, and vacuum deposition. A known, inorganic or organic interlayer or adhesive layer may be formed on the substrate or beneath the reflective layer for the purposes of improving reflectance, improving recording characteristics, improving adhesion, etc.

The material to be used for forming a protective layer on the reflective layer is not particularly limited so long as it protects the reflective layer from external forces. Examples of organic substances include thermoplastic resins, thermosetting resins, electron-beam-curable resins, and UV-curable resins. Examples of inorganic substances include SiO₂, SiN₄, MgF₂, and SnO₂. In the case of a thermoplastic resin, thermosetting resin, or the like, a protective layer can be formed by dissolving the resin in an appropriate solvent, applying the resultant coating fluid, and drying the coating. In the case of a UV-curable resin, a protective layer can be formed by applying the resin as it is or applying a coating fluid prepared by dissolving the resin in an appropriate solvent and then irradiating the coating with UV light to cure the resin. As the UV-curable resin, use can be made of an acrylate resin such as, e.g., a urethane acrylate, epoxy acrylate, or polyester acrylate. These materials may be used alone or as a mixture thereof. The protective layer to be used may be not only a single-layer film but also a multilayered film.

For forming the protective layer, coating fluid application by spin coating, casting, or another method or a technique such as sputtering, chemical vapor deposition is used, or the like as in the case of the recording layer. Preferred of these is spin coating. The thickness of the protective layer is generally in the range of from 0.1 µm to 100 µm. In this embodiment, the thickness of the protective layer is preferably 3 µm or larger, more preferably 5 µm or larger, and is preferably 30 µm or smaller, more preferably 20 µm or smaller.

This embodiment should not be construed as being limited to the modes described above and can be variously modified. For example, the optical recording medium may have two or more recording layers. Furthermore, a technique may be used in which a so-called dummy substrate, i.e., a substrate having no groove in the surface on the reflective-layer side, is laminated, or in which two optical recording media are laminated to each other so that the respective reflective-layer sides face inward, i.e., face each other. A film of an ultraviolet-cured resin, a thin inorganic film, or the like may be formed on the substrate mirror surface side for the purpose of surface protection or prevention of the adhesion of dust particles, etc. Moreover, a print-receiving layer may be further formed, for example, on the protective layer overlying the reflective layer or on the substrate laminated to the reflective-layer side.

### (Multilayered Medium)

The optical recording medium to which this embodiment is applied may be a multilayered medium having two or more recording layers. Application to this multilayered medium also is preferred. The multilayered medium may be an optical recording medium in which recording and reproducing are conducted with a light entering the medium from each side, or may be an optical recording medium in which recording and reproducing are conducted with a light entering the medium from one side only. Of these, the medium of the type in which recording and reproducing are conducted with a light entering the medium from one side only can be advantageously used. This is because the recording layer containing the azo metal chelate dye of the invention has high sensitivity and a high reflectance.

The multilayered medium to which this embodiment is applied is not limited in the number of recording layers so long as it has two or more recording layers. However, the medium has generally two to five, preferably two or three recording layers. Although layer constitution is not particularly limited, the recording layers are usually separated by one or more other layers, e.g., an interlayer. In a preferred layer constitution, each recording layer is disposed in combination with a reflective layer.
Examples of the layer constitution of a multilayered medium of the type which has two recording layers and in which recording and reproducing are conducted with a light striking on the medium from one side only include a constitution composed of substrate/first recording layer/first reflective layer/interlayer/second recording layer/second reflective layer/protective layer. This constitution may suitably have one or more other layers between those layers.
It is preferred that the azo metal chelate dye of the invention should be used in the recording layer located nearest to the substrate (first recording layer). The reason for this is as follows. The dye of the invention shows reduced light absorption at the wavelength of a recording laser. Because of this, when the dye is used in the recording layer located near to the laser light entrance side, the intensity of the light transmitted to the recording layer on the far side is relatively increased. As a result, the decrease in laser power for recording in the far-side layer can be diminished.

In the multilayered medium, the interlayer for separating the two or more recording layers may be constituted of a single-layer film or may be a multilayered film. The interlayer is usually made of a resin which is transparent, can have a guide groove therein, and has high adhesion. It is more preferred to use a resin having a low degree of shrinkage in curing/bonding because the medium obtained therewith has high shape stability.
It is desirable that the interlayer should be made of a material which does not damage the adjoining recording layer. Examples of the material for constituting the interlayer include thermoplastic resins and curable resins such as thermosetting resins and radiation-curable resins. One of such materials for the interlayer may be used alone, or a combination of any desired two or more thereof in any desired proportion may be used.
Preferred of those materials for the interlayer are radiation-curable resins. Of these, ultraviolet-curable resins are preferred. Examples of the ultraviolet-curable resins include a radical type (radical polymerization type) ultraviolet-curable resin and a cationic type (cationic polymerization type) ultraviolet-curable resin; either of these can be used.

As the radial type ultraviolet-curable resin, for example, a composition containing one or more ultraviolet-curable compounds (radical type ultraviolet-curable compounds) and a photopolymerization initiator as components is used. As the radical type ultraviolet-curable compounds can, for example, be used polymerizable monomer components such as monofunctional (meth)acrylates and polyfunctional (meth)acrylates. One of these monomer components may be used alone, or a combination of any desired two or more thereof in any desired proportion may be used. Incidentally, acrylates and methacrylates are inclusively referred to as (meth)acrylates.

The photopolymerization initiator is not limited. However, one of the molecule cleavage type or hydrogen abstraction type, for example, is preferred. It is preferred in the invention that an uncured precursor for ultraviolet-cured resin which contains a radical polymerization type acrylic ester as a main component should be used and cured to obtain an interlayer.

On the other hand, examples of the cationic type ultraviolet-curable resin include epoxy resins containing a cationic polymerization type photoinitiator. Examples of the epoxy resins include the bisphenol A/epichlorohydrin type, alicyclic epoxies, long-chain aliphatic type, brominated epoxy resins, glycidyl ester type, glycidyl ether type, and heterocyclic type. It is preferred to use an epoxy resin reduced in the content of free chlorine and chlorine ions. The amount of chlorine is preferably 1% by weight or smaller, more preferably 0.5% by weight or smaller.
Examples of the cationic polymerization type photoinitiator include sulfonium salts, iodonium salts, and diazonium salts.

Like the substrate described above, the interlayer usually has a guide groove formed therein. The shape of the guide groove formed in the substrate and the shape of the guide groove formed in the interlayer may be the same or different.
The thickness of the interlayer is not limited. However, it is generally 5 µm or larger, preferably 10 µm or larger, and is generally 100 µm or smaller, preferably 70 µm or smaller. It is desirable that the interlayer should have an even thickness.

For forming the interlayer, any desired technique may be used without limitations. However, the interlayer is formed usually in the following manners.
In the case where an interlayer is formed from a thermoplastic resin, thermosetting resin, or the like, the thermoplastic resin or the like is dissolved in an appropriate solvent to prepare a coating fluid. This coating fluid is applied and dried (heated), whereby the interlayer can be formed.
On the other hand, in the case where an interlayer is formed from a radiation-curable resin, this resin by itself is used as a coating fluid or is dissolved in an appropriate solvent to prepare a coating fluid. This coating fluid is applied and cured by irradiation with an appropriate radiation, whereby the interlayer can be formed.

Methods for coating fluid application are not limited. For example, coating techniques such as spin coating and casting. Preferred of these is spin coating is used. In particular, interlayer formation from a resin having a high viscosity is possible also through coating fluid application by screen printing or the like.
In the multilayered medium to which this embodiment is applied, the azo metal chelate dye of the invention may be used in any recording layer.
In the invention, the content of the azo metal chelate dye of the invention in the two or more recording layers is not particularly limited so long as the effects of the invention are obtained. However, the content thereof in one recording layer is generally 0.1-100% by weight, preferably 10-100% by weight, more preferably 40-100% by weight.

Recording in the optical recording medium thus obtained is usually conducted by causing a laser light to irradiate the recording layer disposed on each or one side of the substrate. That part of the recording layer on which the laser light irradiates generally undergoes a thermal deformation due to the decomposition, heat generation, melting, or the like caused by the absorption of laser light energy. The information recorded is reproduced usually by using a laser light to detect a difference in reflectance between the part which has the thermal deformation and the part which does not have the deformation.

The laser to be used for recording/reproducing is not particularly limited. Examples thereof include dye lasers capable of wavelength selection in a wide range within the visible region, helium-neon lasers having a wavelength of 633 nm, high-output semiconductor lasers having wavelengths around 680 nm, 660 nm, 650 nm, and 635 nm which are being developed recently, blue lasers around 400 nm, and harmonic conversion YAG lasers having a wavelength of 532 nm. Of these, semiconductor lasers are preferred from the standpoints of lightweight properties, ease of handling, compactness, cost, etc. In the optical recording medium to which this embodiment is applied, high-density recording and reproducing are possible at one or more wavelengths selected from those. A semiconductor laser wavelength range preferable for the recording dye of the invention may be from 600 nm to 700 nm, and is more preferably from 630 nm to 680 nm, even more preferably from 640 nm to 680 nm.

### EXAMPLES

This embodiment will be explained below in detail by reference to Examples. However, the Examples should not be construed as limiting this embodiment unless they depart from the spirit thereof.

### (EXAMPLE 1)

### (a) Compound Production Example

### (Diazo Coupling)

In 11 mL of ethanol was dissolved 4.3 g of the compound represented by structural formula 1b. Thereto were added 3.5 g of acetic acid, 0.04 g of iodine, and 2 g of the compound represented by structural formula 1a. Furthermore, a solution prepared by dissolving 30% aqueous hydrogen peroxide solution in 11 mL of ethanol was added dropwise thereto at room temperature. The solid precipitated was taken out by filtration and purified. Thus, 1.7 g of the azo compound represented by the following structural formula 1c was obtained.

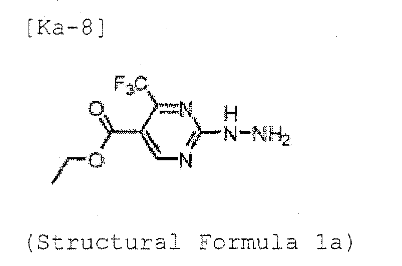

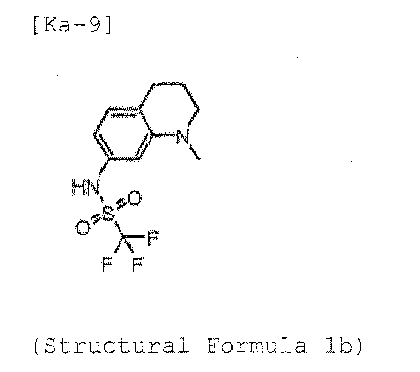

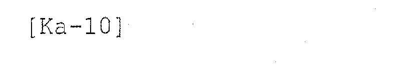

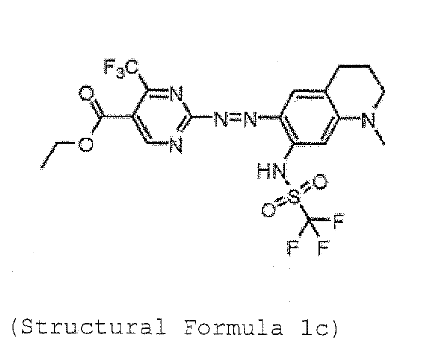

### (Metal Complexation)

In 16 mL of tetrahydrofuran was dissolved 1.6 g of the azo compound represented by structural formula 1c. Thereto was added dropwise at room temperature a solution prepared by dissolving 0.44 g of nickel acetate tetrahydrate in 4 mL of methanol. The solid precipitated was taken out by filtration and dried. Thus, 1.5 g of an azo nickel chelate dye was obtained.
This azo nickel chelate dye had a maximum absorption wavelength of 581 nm and a gram extinction coefficient of 160 L/g·cm in chloroform, and a coating film of the dye had an absorption maximum wavelength of 596 nm.

### (b) Recording Example

A 1.5% by weight TFP (2,2,3,3-tetrafuoro-1-propanol (hereinafter referred to as TFP)) solution of the azo metal chelate dye prepared above was applied by spin coating on a transparent polycarbonate substrate having a guide groove formed therein which had a track pitch of 0.74 µm, groove depth of 160 nm, and groove width of 0.32 µm. The coating was dried at 80°C for 20 minutes. The resultant recording layer had a land-part thickness of 40 nm and a groove part thickness of 85 nm. Silver was sputtered in a thickness of 120 nm on the recording layer. Thereafter, an ultraviolet-curable resin was applied by spin coating in a thickness of 3 µm. Furthermore, a transparent polycarbonate substrate having no groove was laminated thereto after adhesive application by spin coating. Thus, an optical recording medium was produced.

This optical recording medium was subjected to random signal recording with FEM plus modulation using a recording/reproducing apparatus having a wavelength of 650 nm and a numerical aperture of 0.65. For this recording, use was made of recording pulse strategy conditions in accordance with DVD-R Specification for General Ver. 2.1. The recording was conducted at a rate of 28.0 m/s (corresponding to 8-fold speed, i.e., 8X, for DVD-Rs) and a minimum mark length of 0.4 µm.
Thereafter, the same evaluation apparatus was used to reproduce the signals in the recording part at 3.5 m/s (corresponding to 1-fold speed for DVD-Rs) to determine bottom jitter (data-to-clock jitter). Furthermore, the optical recording medium was examined for reflectance in terms of the value obtained by converting a voltage value outputted from the evaluation apparatus (reflectance is proportional to voltage). Incidentally, the value of bottom jitter is preferably lower than 9.0%, more preferably lower than 8.0%. With respect to reflectance, higher values are preferred.
As a result of the examination, the 8X recording sensitivity and the bottom jitter were found to be 34.0 mW and 6.1%, respectively, which were satisfactory. The reflectance was found to be as high as 52%, which also was satisfactory.

### (EXAMPLE 2)

The compound represented by structural formula 1b in Example 1 was replaced by that represented by the following structural formula 2b, and this compound was reacted in the same manner as in Example 1. Thus, an azo nickel chelate dye constituted of the azo compound represented by the following structural formula 2c and nickel was obtained.
This azo nickel chelate dye had a maximum absorption wavelength of 583 nm and a gram extinction coefficient of 168 L/g·cm in chloroform, and a coating film of the dye had an absorption maximum wavelength of 598 nm.

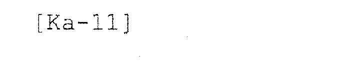

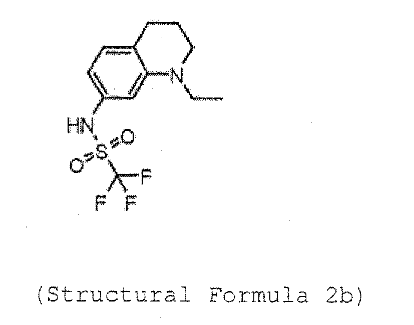

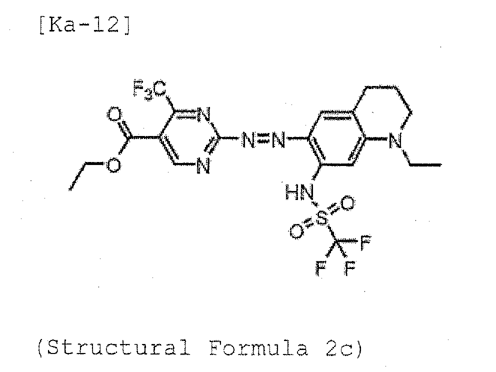

An optical recording medium was produced under the same conditions as in Example 1, except that the dye obtained above was used. The recording layer in this medium had a land-part thickness of 40 nm and a groove-part thickness of 85 nm, which were almost the same as for the dye of Example 1.
Subsequently, this disk was subjected to recording/reproducing under the same conditions as in Example 1. In this examination, the disk gave satisfactory results including an 8X recording sensitivity of 34.0 mW, a bottom jitter in 1X reproducing of 6.2%, and a reflectance of 52%.

### (EXAMPLE 3)

The compound represented by structural formula 1b in Example 1 was replaced by that represented by the following structural formula 3b, and this compound was reacted in the same manner as in Example 1. Thus, an azo nickel chelate dye constituted of the azo compound represented by the following structural formula 3c and nickel was obtained.
This azo nickel chelate dye had a maximum absorption wavelength of 584 nm and a gram extinction coefficient of 165 L/g·cm in chloroform, and a coating film of the dye had an absorption maximum wavelength of 598 nm.

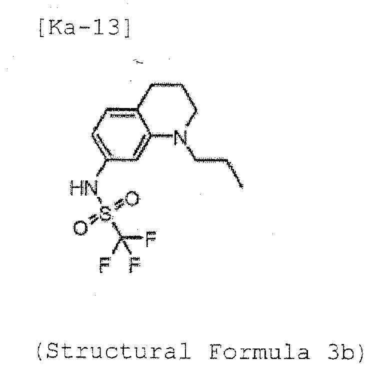

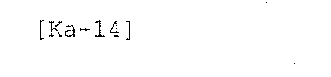

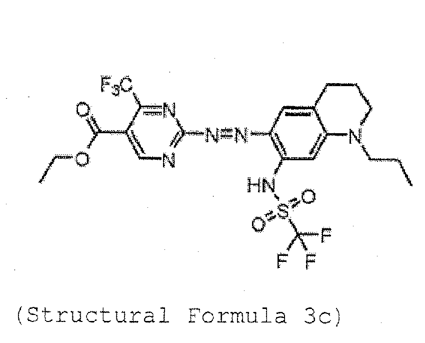

An optical recording medium was produced under the same conditions as in Example 1, except that the dye obtained above was used. The recording layer in this medium had a land-part thickness of 40 nm and a groove-part thickness of 85 nm, which were almost the same as for the dye of Example 1.
Subsequently, this disk was subjected to recording/reproducing under the same conditions as in Example 1. In this examination, the disk gave satisfactory results including an 8X recording sensitivity of 33.0 mW, a bottom jitter in 1X reproducing of 6.3%, and a reflectance of 50%.

### (EXAMPLE 4)

The compound represented by structural formula 1b in Example 1 was replaced by that represented by the following structural formula 4b, and this compound was reacted in the same manner as in Example 1. Thus, an azo nickel chelate dye constituted of the azo compound represented by the following structural formula 4c and nickel was obtained.
This azo nickel chelate dye had a maximum absorption wavelength of 586 nm and a gram extinction coefficient of 161 L/g·cm in chloroform, and a coating film of the dye had an absorption maximum wavelength of 600 nm.

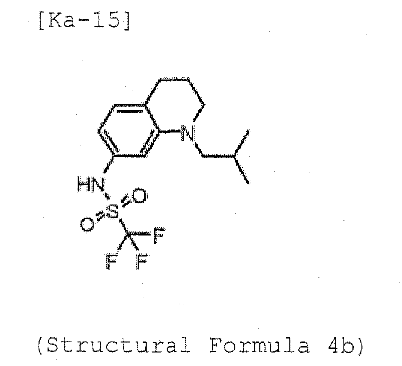

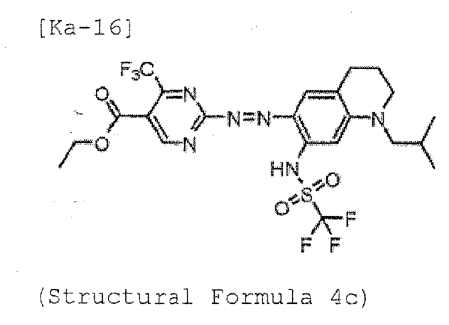

An optical recording medium was produced under the same conditions as in Example 1, except that the dye obtained above was used. The recording layer in this medium had a land-part thickness of 40 nm and a groove-part thickness of 85 nm, which were almost the same as for the dye of Example 1.
Subsequently, this disk was subjected to recording/reproducing under the same conditions as in Example 1. In this examination, the disk gave satisfactory results including an 8X recording sensitivity of 34.0 mW, a bottom jitter in 1X reproducing of 6.1%, and a reflectance of 51%.

### (EXAMPLE 5)

The compound represented by structural formula 1a in Example 1 was replaced by that represented by the following structural formula 5a and the compound represented by structural Formula 1b in Example 1 was replaced by that represented by structural formula 2b. These compounds were reacted in the same manner as in Example 1. Thus, an azo nickel chelate dye constituted of the azo compound represented by the following structural formula 5c and nickel was obtained.
This azo nickel chelate dye had a maximum absorption wavelength of 579 nm and a gram extinction coefficient of 205 L/g·cm in chloroform, and a coating film of the dye had an absorption maximum wavelength of 598 nm.

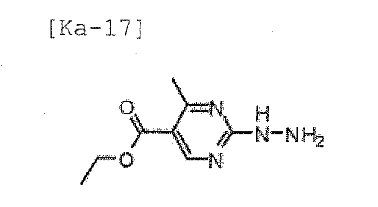

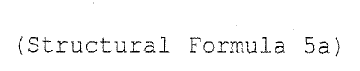

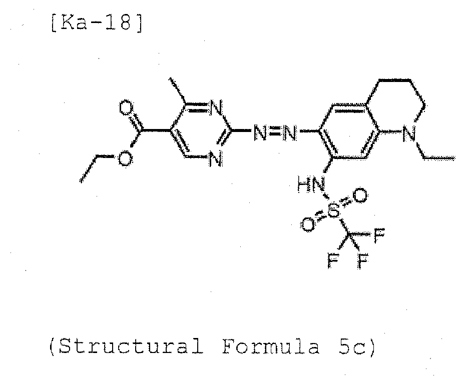

An optical recording medium was produced under the same conditions as in Example 1, except that the dye obtained above was used. The recording layer in this medium had a land-part thickness of 40 nm and a groove-part thickness of 85 nm, which were almost the same as for the dye of Example 1.
Subsequently, this disk was subjected to recording/reproducing under the same conditions as in Example 1. In this examination, the disk gave satisfactory results including an 8X recording sensitivity of 36.0 mW, a bottom jitter in 1X reproducing of 6.0%, and a reflectance of 54%.

### (EXAMPLE 6)

The compound represented by structural formula 1a in Example 1 was replaced by that represented by the following structural formula 6a and the compound represented by structural formula 1b in Example 1 was replaced by that represented by structural formula 2b. These compounds were reacted in the same manner as in Example 1. Thus, an azo nickel chelate dye constituted of the azo compound represented by the following structural formula 6c and nickel was obtained.
This azo nickel chelate dye had a maximum absorption wavelength of 582 nm and a gram extinction coefficient of 185 L/g·cm in chloroform, and a coating film of the dye had an absorption maximum wavelength of 597 nm.

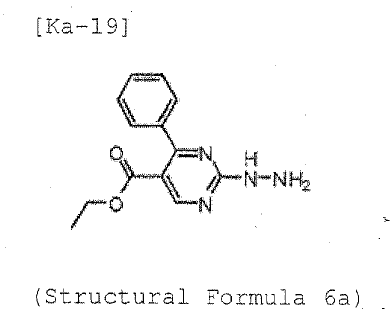

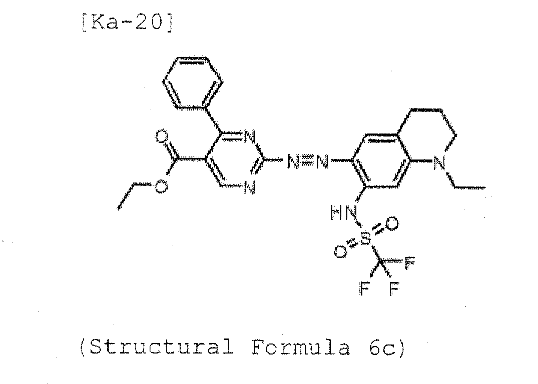

An optical recording medium was produced under the same conditions as in Example 1, except that the dye obtained above was used. The recording layer in this medium had a land-part thickness of 40 nm and a groove-part thickness of 85 nm, which were almost the same as for the dye of Example 1.
Subsequently, this disk was subjected to recording/reproducing under the same conditions as in Example 1. In this examination, the disk gave satisfactory results including an 8X recording sensitivity of 38.0 mW, a bottom jitter in 1X reproducing of 6.5%, and a reflectance of 51%.

### (EXAMPLE 7)

The compound represented by structural formula 1a in Example 1 was replaced by that represented by structural formula 6a and the compound represented by structural formula 1b in Example 1 was replaced by that represented by structural formula 4b. These compounds were reacted in the same manner as in Example 1. Thus, an azo nickel chelate dye constituted of the azo compound represented by the following structural formula 7c and nickel was obtained.
This azo nickel chelate dye had a maximum absorption wavelength of 586 nm and a gram extinction coefficient of 183 L/g·cm in chloroform, and a coating film of the dye had an absorption maximum wavelength of 600 nm.

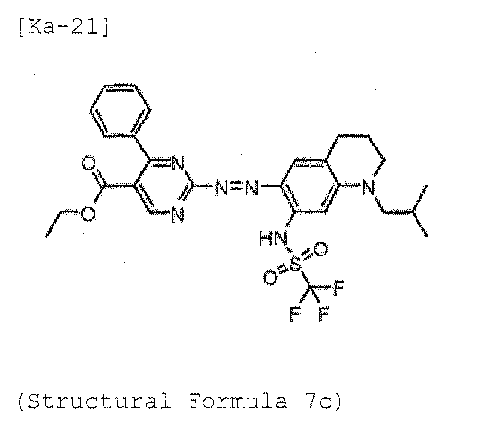

An optical recording medium was produced under the same conditions as in Example 1, except that the dye obtained above was used. The recording layer in this medium had a land-part thickness of 40 nm and a groove-part thickness of 85 nm, which were almost the same as for the dye of Example 1.
Subsequently, this disk was subjected to recording/reproducing under the same conditions as in Example 1. In this examination, the disk gave satisfactory results including an 8X recording sensitivity of 38.0 mW, a bottom jitter in 1X reproducing of 6.4%, and a reflectance of 50%.

### (COMPARATIVE EXAMPLE 1)

The compound represented by structural formula 1a in Example 1 was replaced by that represented by the following structural formula 8a and the compound represented by structural formula 1b in Example 1 was replaced by the compound represented by structural formula 2b, which was used in Example 2. These compounds were reacted in the same manner as in Example 1. Thus, an azo nickel chelate dye constituted of the azo compound represented by the following structural formula 8c and nickel was obtained.
This azo nickel chelate dye had a maximum absorption wavelength of 568 nm and a gram extinction coefficient of 180 L/g·cm in chloroform, and a coating film of the dye had an absorption maximum wavelength of 585 nm.

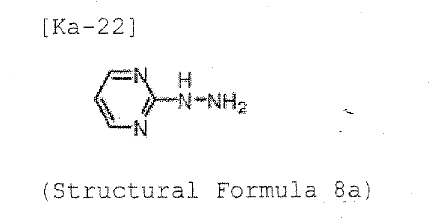

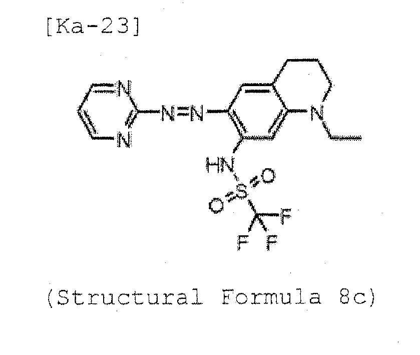

An optical recording medium was produced under the same conditions as in Example 1, except that the dye obtained above was used. The recording layer in this medium had a land-part thickness of 40 nm and a groove-part thickness of 85 nm, which were almost the same as for the dye of Example 1.
Subsequently, this disk was subjected to recording/reproducing under the same conditions as in Example 1. In this examination, the disk had an 8X recording sensitivity of 43.0 mW, a bottom jitter in 1X reproducing of 6.5%, and a reflectance of 50%. In these results, the reflectance and the bottom jitter were satisfactory. However, the recording sensitivity was poor as compared with those in the Examples.

### (COMPARATIVE EXAMPLE 2)

The compound represented by structural formula 1a in Example 1 was replaced by that represented by the following structural formula 9a and the compound represented by structural formula 1b in Example 1 was replaced by that represented by the following structural formula 9b. These compounds were reacted in the same manner as in Example 1. Thus, an azo nickel chelate dye constituted of the azo compound represented by the following structural formula 9c and nickel was obtained.
This azo nickel chelate dye had a maximum absorption wavelength of 522 nm and a gram extinction coefficient of 146 L/g·cm in chloroform, and a coating film of the dye had an absorption maximum wavelength of 561 nm.

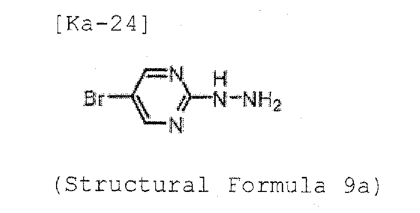

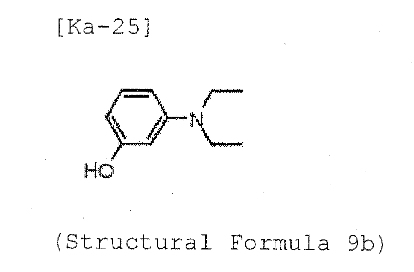

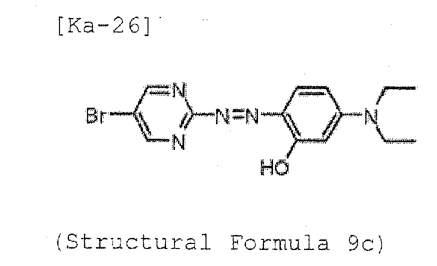

An optical recording medium was produced under the same conditions as in Example 1, except that the dye obtained above was used. The recording layer in this medium had a land-part thickness of 40 nm and a groove-part thickness of 85 nm, which were almost the same as for the dye of Example 1.
Subsequently, recording/reproducing in this disk was attempted under the same conditions as in Example 1. However, recording at 8X was completely impossible even when a power of 55 mW, which was the upper limit for the tester, was applied. Because of this, reflectance only was determined. As a result, the reflectance of the disk was found to be 60%.

The results obtained in Example 1 to Example 7, Comparative Example 1, and Comparative Example 2 are shown in Table 1. It can be seen from the results given in Table 1 that Example 1 to Example 7 each give excellent results concerning recording sensitivity as compared with Comparative Example 1 and Comparative Example 2.

**[Table 1]**

| | Dye | Maximum absorption wavelength (nm) | Gram extinction coefficient (L/g·cm) | Absorption maximum wavelength of coating film (nm) | 8X recording sensitivity (mW) | Bottom jitter (%) | Reflectance (%) |
|---|---|---|---|---|---|---|---|
| Ex. 1 | structural formula 1c | 581 | 160 | 596 | 34.0 | 6.1 | 52 |
| Ex. 2 | structural formula 2c | 583 | 168 | 598 | 34.0 | 6.2 | 52 |
| Ex. 3 | structural formula 3c | 584 | 165 | 598 | 33.0 | 6.3 | 50 |
| Ex. 4 | structural formula 4c | 586 | 161 | 600 | 34.0 | 6.1 | 51 |
| Ex. 5 | structural formula 5c | 579 | 205 | 598 | 36.0 | 6.0 | 54 |
| Ex. 6 | structural formula 6c | 582 | 185 | 597 | 38.0 | 6.5 | 51 |
| Ex. 7 | structural formula 7c | 586 | 183 | 600 | 38.0 | 6.4 | 50 |
| Comp. Ex. 1 | structural formula 8c | 568 | 180 | 585 | 43.0 | 6.5 | 50 |
| Comp. Ex. 2 | structural formula 9c | 522 | 146 | 561 | recording was impossible | | 60 |

### (EXAMPLE 8)

A two-layer medium was produced, and the recording characteristics of Layer 0 were evaluated. The term Layer 0 means the recording layer (first recording layer) located on the side near to the substrate. Layer 1 means the recording layer (second recording layer) located far from the laser light entrance side.
As the Layer 0 was used a 50:50 (by weight) mixture of the azo nickel chelate dye represented by structural formula 2c and an azo zinc chelate dye constituted of the azo compound represented by the following structural formula 10c and zinc. As the Layer 1, use was made of the azo zinc chelate dye constituted of the azo compound represented by the following structural formula 10c and zinc.

As a first reflective layer was deposited an AgBi_{1.0} alloy film in a thickness of 20 nm. As a second reflective layer was deposited a silver film having a thickness of 120 nm. As an interlayer was formed a film of an ultraviolet-cured resin in a thickness of 50 µm. The track pitch, groove depth, and groove width for each recording layer were regulated to 0.74 µm, 170 nm, and 0.31 µm, respectively. The Layer 0 had a land-part thickness of 30 nm and a groove-part thickness of 70 nm. The Layer 1 had a land-part thickness of 35 nm and a groove-part thickness of 75 nm.

This optical recording medium was subjected to random signal recording with FEM plus modulation using a recording/reproducing apparatus having a wavelength of 650 nm and a numerical aperture of 0.65. For this recording, use was made of recording pulse strategy conditions in accordance with DVD+R 8.5-Gigabytes Basic Format Specifications version 1.1. The recording was conducted at a rate of 46.1 m/s (corresponding to 12-fold speed, i.e., 12X, for DVD+Rs) and a minimum mark length of 0.44 µm. Thereafter, the same evaluation apparatus was used to reproduce the signals in the recording part at 3.84 m/s to determine bottom jitter (data-to-clock jitter).
As a result of the evaluation, the Layer 0 was found to have a 12X recording sensitivity of 53.0 mW, a bottom jitter in 1X reproducing of 7.5%, and a reflectance of 17%. These were satisfactory results.

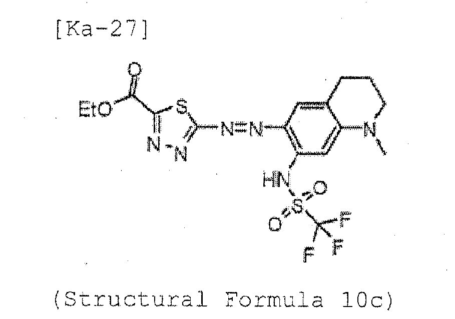

While the invention has been described in detail and with reference to specific embodiments thereof, it will be apparent to one skilled in the art that various changes and modifications can be made therein without departing from the spirit and scope thereof.
This application is based on a Japanese patent application filed on September 29, 2006 (Application No. 2006-267134), the entire contents thereof being herein incorporated by reference.

### INDUSTRIAL APPLICABILITY

According to the invention, an azo metal chelate dye is provided which is suitable for the recording layer of an optical recording medium capable of high-speed recording or for at least one recording layer of an optical recording medium having two or more recording layers. Also provided is an optical recording medium.

## Claims

1. An azo metal chelate dye comprising an azo dye compound represented by the following general formula (1) and a metal: 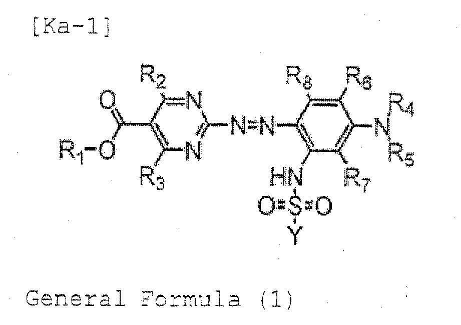 (wherein R₁ represents a linear or branched alkyl group that maybe substituted or a cycloalkyl group that may be substituted; R₂ and R₃ each independently represents a hydrogen atom, a linear or branched alkyl group that may be substituted, an aryl group that may be substituted, or a heterocyclic group that may be substituted; R₄, R₅, R₆, R₇, and R₈ each independently represents a hydrogen atom or a linear or branched alkyl group that may be substituted, and R₄ and R₅, R₄ and R₆, or R₅ and R₇ may be bonded to each other to form a ring; Y represents a linear or branched alkyl group substituted with at least two fluorine atoms; and the chelate dye is constituted of the compound represented by general formula (1) fromwhich a proton is released, and the metal).

2. The azo metal chelate dye according to claim 1, wherein the metal is any of Ni, Co, Cu, and Pd.

3. An azo metal chelate dye comprising an azo dye compound represented by the following general formula (2) and Ni: 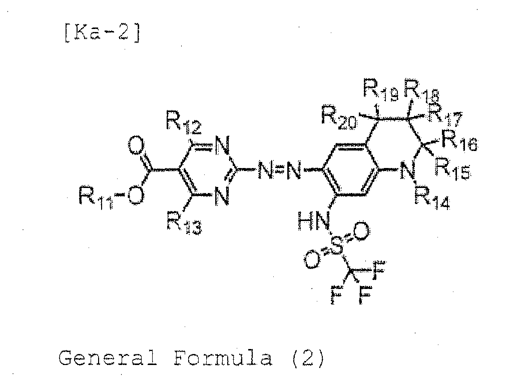 (wherein R₁₁ represents a linear or branched alkyl group that maybe substituted or a cycloalkyl group that may be substituted; R₁₂ and R₁₃ each independently represents a hydrogen atom, a linear branched alkyl group that may be substituted, an aryl group that may be substituted, or a heterocyclic group that may be substituted; R₁₄ represents a linear or branched alkyl group that may be substituted; R₁₅ to R₂₀ each independently represent a hydrogen atom or a linear or branched alkyl group that may be substituted; and the chelate dye is constituted of the compound represented by general formula (2) from which a proton is released, and the metal).

4. The azo metal chelate dye according to claim 3, wherein in general formula (2), R₁₁ is a linear or branched alkyl group having 1-4 carbon atoms, R₁₂ is an unsubstituted or halogen-substituted alkyl or aryl group, R₁₃ is a hydrogen atom, R₁₄ is a linear alkyl group having 1-6 carbon atoms or a branched alkyl group having 3-8 carbon atoms, and R₁₅ to R₂₀ are a hydrogen atom.

5. An optical recording medium comprising a recording layer comprising the azo metal chelate dye according to any one of claims 1 to 4.

6. The optical recording medium according to claim 5, which comprises two or more recording layers, at least one of the recording layers comprising the azo metal chelate dye.

7. The optical recording medium according to claim 5 or 6, which is capable of recording at an 8-fold speed or higher.
